# EUROPÄISCHE PATENTSCHRIFT

(11) **EP 1 243 461 B1**
(45) Veröffentlichungstag und Bekanntmachung des Hinweises auf die Patenterteilung: **15.08.2007**
(21) Anmeldenummer: 02090055.1
(22) Anmeldetag: 13.02.2002
(51) Int. Cl.: B60N 2/16

(54) **Sitzuntergestell für einen Fahrzeugsitz**
Seat base body for a vehicle seat
Chassis d'assise de siège pour un siège de véhicule

(30) Priorität: 14.03.2001 DE 10113153
(43) Veröffentlichungstag der Anmeldung: 25.09.2002
(73) Patentinhaber: Brose Fahrzeugteile GmbH & Co. KG, Coburg, 96450 Coburg (DE)
(72) Erfinder: Freisleben, Bernd, 96231 Staffelstein (DE)
(74) Vertreter: Ninnemann, Detlef

(56) Entgegenhaltungen:
- EP-A- 0 589 421
- EP-A- 0 813 990
- DE-A- 19 906 621
- DE-A- 19 922 993
- DE-C- 19 904 224
- PATENT ABSTRACTS OF JAPAN vol. 011, no. 102 (M-576), 31. März 1987 (1987-03-31) -& JP 61 249844 A (IKEDA BUSSAN CO LTD), 7. November 1986 (1986-11-07) -& GB 2 175 200 A (IKEDA BUSSAN CO. LTD.) 26. November 1986 (1986-11-26)

## Beschreibung

Die Erfindung bezieht sich auf ein Sitzuntergestell für einen Fahrzeugsitz gemäß dem Oberbegriff des Patentanspruchs 1.

Zur individuellen Einstellung von Sitzpositionen für Fahrzeuginsassen ist es bekannt, Fahrzeugsitze mit einer Sitzlängsverstellung, Sitzhöhenverstellung, Sitzneigungsverstellung, Sitzkissentiefenverstellung sowie mit einer Lehnenneigungsverstellung und Kopfstützenhöheneinstellung sowie weiteren Komforteinstellungen zu versehen. Translatorische Verstellungen wie Sitzlängsverstellungen und Sitzkissentiefenverstellungen werden üblicherweise unter Verwendung von Schienen- oder Kulissenführungen realisiert. Zur Sitzlängsverstellung dienen formschlüssig ineinandergreifende Schienen mit einer mit dem Fahrzeugboden verbundenen Unterschiene und einer mit dem Fahrzeugsitz verbundenen Oberschiene. In gleicher Weise wird eine aus der JP 61 249844 A bekannte Sitztiefenverstellung mittels ineinandergreifender Schienen wie bei einer Sitzlängsverstellung bewirkt.

Für die verschiedenen Sitzverstelleinrichtungen sind üblicherweise voneinander getrennte manuelle oder motorische Antriebe sowie an den entsprechenden Sitzteilen angreifende und mit den Antrieben verbundene Hebel oder Getriebeeinrichtungen zur Übertragung der Verstellbewegung vom Antrieb zu dem betreffenden Sitzteil vorgesehen. Diese Übertragungseinrichtungen haben einen erheblichen Platzbedarf und greifen nicht immer optimal an dem zu verstellenden Sitzteil an, wenn der optimale Kraftangriffspunkt für mehrere Verstelleinrichtungen geeignet ist.

Aus diesem Grunde wird angestrebt, mehrere Verstelleinrichtungen miteinander zu kombinieren, um dadurch Platz einzusparen und eine Vielzahl von Bedienelementen zu vermeiden.

Eine aus der DE 199 04 224 C1 bekannte Mehrfacheinstellung von Sitzhöhe und Sitzneigung weist eine Unterschiene, eine Oberschiene, einen Verstellhebel und einen Verbindungshebel auf, der mit der Oberseite der Oberschiene gelenkverbunden ist und der auf den selben Achsen verschwenkbar gelagert ist, wie der Verstellhebel.

Eine aus der EP 0 813 990 A2 bekannte Vorrichtung zur translatorischen Verstellung eines Sitzteils, insbesondere zur Sitzkissenlängsverstellung und Kraftfahrzeugsitzen, weist eine Führungskulisse, ein in der Führungskulisse geführtes Stützelement und einen zwischen dem Rand der Führungskulisse und dem Stützelement gelagerten Gleiter auf.

Ein aus der DE 199 22 993 A1 bekanntes Sitzuntergestell für einen Kraftfahrzeugsitz weist einen beweglichen Sitzrahmen auf, der an seinen beiden Längsseiten über jeweils einen vorderen und einen hinteren Verstellhebel mit einer fahrzeugbodenseitigen Baugruppe gelenkverbunden ist und eine Einstellvorrichtung für die Neigung des Sitzkissenträgers aufweist, das ein Spindelgetriebe umfaßt, das mit einem der Verstellhebel zur Einstellung der Sitzhöhe mitfahrend verbunden ist.

Weiterhin ist aus der DE 199 04 224 C1 ein verstellbares Sitzuntergestell für einen Fahrzeugsitz mit einer Schienenlängsführung bekannt, die eine am Fahrzeugboden befestigbare Unterschiene und gleitend auf der Unterschiene geführte Oberschiene sowie eine Einrichtung zur Einstellung der Sitzhöhe und/oder Sitzneigung mit einem Verstellhebel umfaßt, der seitlich neben der Schienenlängsführung angeordnet und auf jeweils einer Achse einerseits mit der Oberschiene und andererseits mit dem Sitzträger gelenkverbunden ist.

Aus der DE 199 06 621 A1 ist eine Multiverstellung mit einem Antrieb für einen Fahrzeugsitz mit einer höhen- und neigungsverstellbaren Sitzwannne bekannt, die im vorderen und hinteren Bereich auf Böcken mit entgegengesetzt geneigten Steuerkulissen gelagert ist, wobei die Böcke verschiebbar an einer Sitzschiene lagern.

Aus der EP 0 589 421 A1 ist ein einstellbarer Fahrzeugsitz bekannt, der einen aus zwei Seitenteilen zusammengesetzten Sitzrahmen aufweist. Die Seitenteile sind mit ihrer Unterseite mit einer horizontalen Längsverstellung verbunden. Zusätzlich dazu ist im unteren Abschnitt der Seitenteile eine vertikale Führung vorgesehen.

Aufgabe der vorliegenden Erfindung ist es, bei einem Sitzuntergestell für einen Fahrzeugsitz der eingangs genannten Art die Sitztiefen- und Sitzneigungsverstellung so miteinander zu kombinieren, daß ein optimaler Kraftangriffspunkt unter Verwendung einer minimalen Anzahl von Kraftübertragungselementen bei gleichzeitig optimalen Führungseigenschaften gewährleistet ist.

Diese Aufgabe wird erfindungsgemäß durch die Merkmale des Patentanspruchs 1 gelöst.

Die erfindungsgemäße Lösung schafft eine Kombination für eine Sitztiefen- und Sitzneigungsverstellung mit optimalem Kraftangriffspunkt für beide Sitzverstellungen und ermöglicht eine deutliche Teilereduzierung für die Kraftübertragung vom Verstellantrieb zum Kraftangriffspunkt am Sitzteil. Gleichzeitig sind optimale Führungseigenschaften sichergestellt, d.h., es werden gute Gleiteigenschaften bei minimalem Spiel der ineinandergreifenden Kraftübertragungselemente gewährleistet.

Der erfindungsgemäßen Lösung liegt der Gedanke zugrunde, unabhängig voneinander eine horizontale und vertikale Bewegung der Sitzwanne mittels zweier sich kreuzender Kulissenführungen zu realisieren, durch die eine Kreuzgelenkachse greift, die sowohl die Sitztiefenverstellung als auch die Sitzneigungsverstellung bewirkt.

Vorzugsweise sind die Führungskulissen als Langloch ausgebildet und in den Sitzseitenteilen und Sitzwannenaufnahmen im Wesentlichen senkrecht zueinander stehend ausgerichtet angeordnet. Dabei verläuft die in den Sitzseitenteilen angeordnete Führungskulisse im Wesentlichen senkrecht zur Längserstreckung der Sitzseitenteile und bewirkt die Führung der Kreuzgelenkachse für eine Sitzneigungsverstellung, während die im Wesentlichen senkrecht hierzu verlaufende Führungskulisse in den Sitzwannenaufnahmen, die fest mit der Sitzwanne verbunden sind, der Sitztiefenverstellung dienen.

Die Kreuzgelenkachse besteht insbesondere aus drei mit einer Bohrung versehenen Gleitelementen und einem durch die Bohrung der Gleitelemente und die Führungskulissen gesteckten Gewindebolzen, der über eine Hebelanordnung sowohl mit der Antriebseinrichtung zur Sitztiefenverstellung als auch mit der Antriebseinrichtung zur Sitzneigungsverstellung verbunden ist.

Von dem dreiteiligen Gleitersystem sind die beiden äusseren Gleiter in den Führungskulissen der Sitzseitenteile und der Sitzwannenaufnahme gleitend angeordnet. Der mittlere Gleiter dient zur Abstützung der Sitztiefen- und Sitzneigungsverstellung zwischen den Führungskulissen der Sitzseitenteile und der Sitzwannenaufnahme. Die äusseren Gleiter weisen einen hohlzylindrischen Schaft auf, der in die jeweilige Führungskulisse gesteckt wird, weiterhin weisen die äusseren Gleiter seitliche, vom Kopf der Gleiterelemente abstehende Stege auf, die an den Seitenbegrenzungen der jeweiligen Führungskulissen anliegen. Die Stege und die Schäfte dienen zur Führung der Sitzneigungs- und Sitztiefenverstellung und sollen das Spiel der Verstelleinrichtung begrenzen und die Reibungseigenschaften verbessern.

Das mittlere Gleiterelement des dreiteiligen Gleitersystems dient zur Abstützung der Sitztiefen- und Sitzneigungsverstellung und weist seitliche Stege auf, die weiter voneinander beabstandet sind als die Breite der als Langloch ausgebildeten Führungskulissen, die mit stegförmigen Seitenbegrenzungen versehen sind, so daß Kippbewegungen der Verstelleinrichtung begrenzt werden. Durch an den Seitenflächen der Sitzseitenteile und der Sitzwannenaufnahme anliegende federnde Zungen des mittleren Gleiterelements wird das axiale Spiel der Kreuzgelenkachse beseitigt, da das mittlere Gleitelement mit den federnden Zungen gegen die an die Führungskulissen angrenzenden Flächen der Sitzseitenteile und der Sitzwannenaufnahmen drückt.

Die Verbindung der Kreuzgelenkachse mit den beiden Antriebseinrichtungen für die Sitztiefen- und Sitzneigungsverstellung erfolgt über einen Verstellhebel, der mit einem Spindelantrieb sowohl für die Sitztiefen- als auch für die Sitzneigungsverstellung verbunden ist. Der Spindelantrieb zur Sitztiefenverstellung ist über ein Drehgelenk und eine Traverse mit dem Verstellhebel verbunden. Der Spindelantrieb für die Sitzneigungsverstellung ist über einen ersten Drehhebel mit einem die beiden Kreuzgelenkachsen verbindenden Verstellrohr und einem zweiten Drehhebel mit dem Verstellhebel verbunden.

Der Verstellhebel weist eine erste Anlenkung zur Aufnahme des Gewindebolzens der Kreuzgelenkachse, eine mittlere Aufnahme zur Anlenkung der Traverse und eine dritte Aufnahme zur Anlenkung des zweiten Drehhebels des Spindelantriebs zur Sitzneigungsverstellung auf.

Anhand eines in der Zeichnung dargestellten Ausführungsbeispieles soll der der Erfindung zugrunde liegende Gedanke näher erläutert werden. Es zeigen:
- Figur 1: eine perspektivische Ansicht eines auf Schienenlängsführungen gelagerten Sitzuntergestells;
- Figur 2: eine Seitenansicht eines Teils des Sitzuntergestells mit sich kreuzenden Kulissen zur Sitztiefen- und Sitzneigungsverstellung;
- Figur 3: eine perspektivische Ansicht der sich kreuzenden Führungskulissen zur Sitzneigungs- und Sitztiefenverstellung;
- Figur 4: eine perspektivische Ansicht der sich kreuzenden Führungskulissen mit den Antriebseinrichtungen zur Sitztiefen- und Sitzneigungsverstellung;
- Figur 5: eine Explosionsdarstellung der Einzelteile der Kulissenführung zur Sitztiefen- und Sitzneigungsverstellung;

- Figur 6: eine perspektivische Einzelansicht einer Sitzwannenaufnahme mit Führungskulisse;
- Fig. 7 - 9: eine perspektivische Ansicht, Draufsicht und ein Schnitt durch ein äußeres Gleitelement;
- Fig. 10 - 12: mehrere Ansichten und Schnitte durch das mittlere Gleitelement und
- Fig. 13 u. 14: eine perspektivische Ansicht und Seitenansicht des Gewindebolzens der Kreuzgelenkachse.

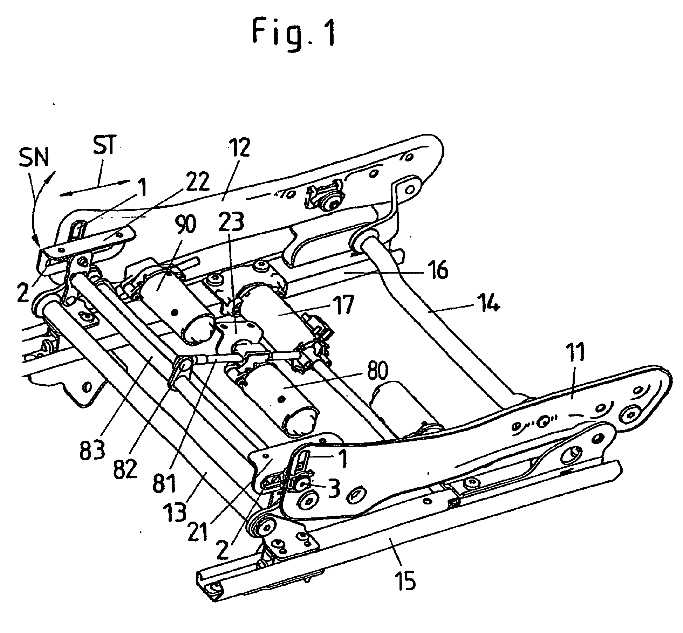

Figur 1 zeigt eine perspektivische Ansicht eines Sitzuntergestells eines Fahrzeugsitzes, das an seinen beiden Längsseiten mit je einer Oberschiene einer Schienenlängsführung 15, 16 verbunden ist, die aus den Oberschienen und den mit einem Fahrzeugboden verbundenen Unterschienen besteht, die in Längsrichtung verschiebbar formschlüssig ineinandergreifen. Das Sitzuntergestell besteht aus zwei Sitzseitenteilen 11, 12, die an ihren vorderen und hinteren Enden über Querstreben 13, 14 zur Bildung eines Sitzrahmens verbunden sind. Zur Längsverstellung des Fahrzeugsitzes ist ein Verstellmotor 17 vorgesehen, dessen Antriebsachse über ein Getriebe in die Schienenlängsführung 15, 16 eingreift. Zur Sitzhöhenverstellung dient eine Hebelanordnung, die den aus den Sitzseitenteilen 11, 12 und den Querstreben 13, 14 bestehenden Sitzrahmen in Bezug auf den Fahrzeugboden anhebt bzw. absenkt.

Eine Sitzwanne (Sitzkissenträger) ist an zwei neben den Sitzseitenteilen 11, 12 angeordneten Sitzwannenaufnahmen 21, 22 sowie an einer Sitzwannenbefestigung 23, von einem Antriebsmotor 80 einer Antriebseinrichtung 8 zur Sitztiefenverstellung angeflanscht ist, befestigt. Die als Spindelantrieb ausgebildete Antriebseinrichtung 8 zur Sitztiefenverstellung weist neben dem Antriebsmotor 80 eine Spindel 81 sowie ein Drehgelenk 82 und eine Traverse 83 auf und bewirkt eine Verschiebung der Sitzwanne in Richtung des Doppelpfeiles ST relativ zum Sitzrahmen.

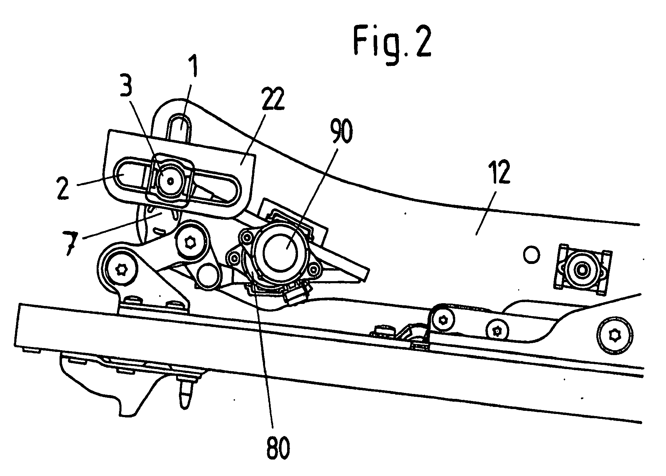

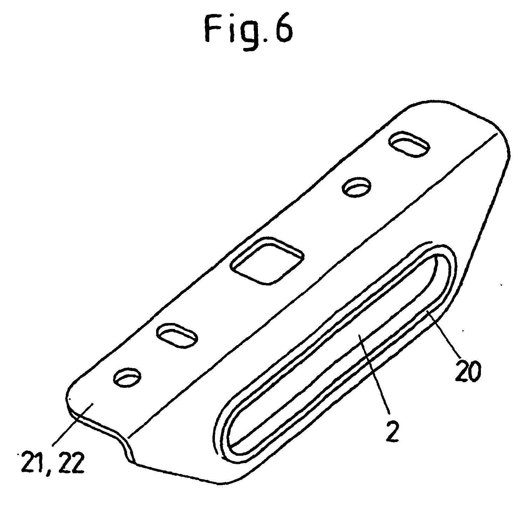

Eine in den nachfolgenden Figuren im Detail dargestellte Antriebseinrichtung 9 zur Sitzneigungsverstellung enthält einen Antriebsmotor 90 und bewirkt ein Anheben bzw. Absenken der Vorderkante der Sitzwanne entsprechend dem Doppelpfeil SN und damit eine Drehbewegung um einen fiktiven Drehpunkt. Die in dem Bereich der Vorderkanten der Sitzseitenteile 11, 12 sowie den Sitzwannenaufnahmen 21, 22 angeordnete kombinierte Verstelleinrichtung zur Verstellung der Sitztiefe und Sitzneigung wird nachfolgend anhand der Figuren 2 bis 5 sowie anhand von Einzelteildarstellungen in den Figuren 6 bis 16 näher erläutert.

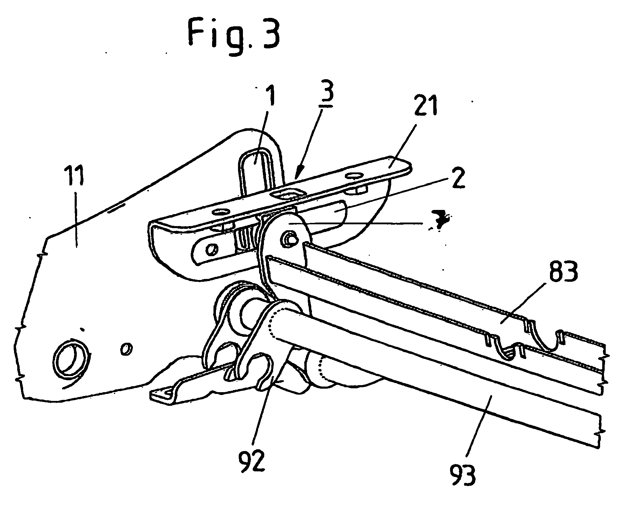

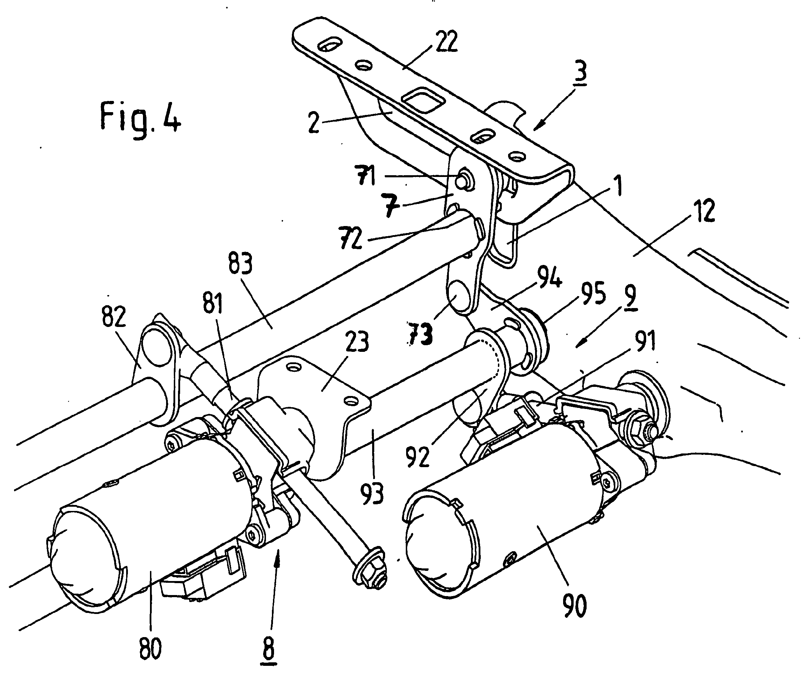

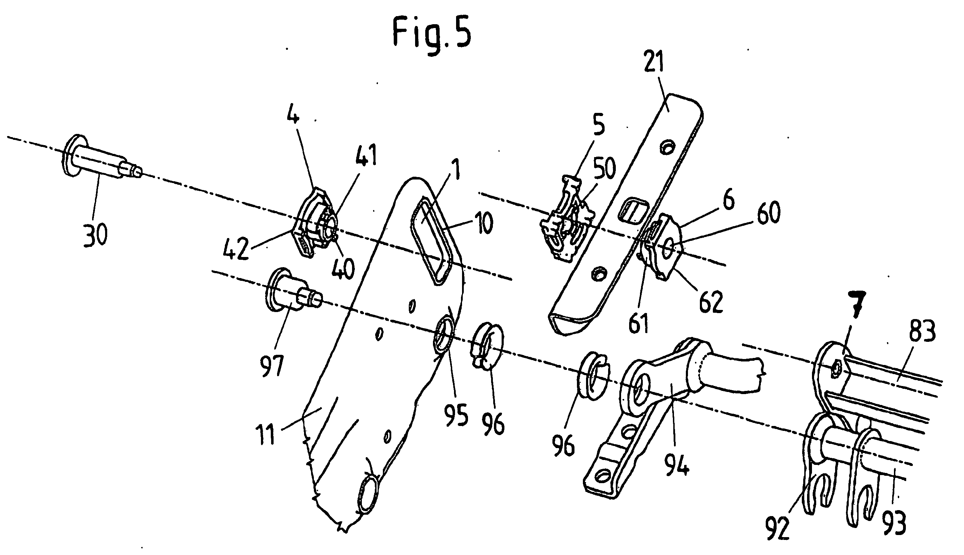

Figur 2 zeigt eine Seitenansicht einer der beiden Verstelleinrichtungen, die am in Fahrtrichtung rechten Sitzseitenteil 12 des Fahrzeugsitzes angeordnet ist. Die Verstelleinrichtung umfaßt zwei sich kreuzende Kulissen 1, 2, die als Langloch ausgebildet sind und von denen die erste Führungskulisse 1 im Wesentlichen senkrecht zur Längserstreckung des Sitzseitenteiles 12 am vorderen Ende des Sitzseitenteils 12 und die zweite Führungskulisse 2 im Wesentlichen senkrecht zur ersten Führungskulisse 1 in der rechten Sitzwannenaufnahme 22 angeordnet ist. Beide sich kreuzende Führungskulissen 1, 2 sind über eine Kreuzgelenkachse 3 miteinander verbunden, an der die beiden Antriebseinrichtungen 8, 9 zur Sitztiefen- und Sitzneigungsverstellung angreifen. Wie dies im einzelnen erfolgt, ist den perspektivischen Darstellungen der Verstelleinrichtung gemäß den Figuren 3 und 4 sowie der Explosionszeichnung gemäß Figur 5 zu entnehmen.

Figur 3 zeigt eine perspektivische Ansicht der in Fahrtrichtung linken, am linken Sitzseitenteil 11 angeordneten Verstelleinrichtung, die ebenso wie das rechte Sitzseitenteil 12 eine als Langloch ausgebildete, sich im Wesentlichen senkrecht zur Längserstreckung des Sitzseitenteils 11 erstreckende Führungskulisse 1 aufweist. Senkrecht zur ersten Führungskulisse 1 erstreckt sich die in der linken Sitzwannenaufnahme 21 angeordnete und ebenfalls als Langloch ausgebildete zweite Führungskulisse 2, die sich somit im Wesentlichen in Längsverstellrichtung des Fahrzeugsitzes erstreckt. Die beide Führungskulissen 1, 2 durchgreifende Kreuzgelenkachse 3 ist mit einem Verstellhebel 7 verbunden, an dem die mit der Antriebseinrichtung 8 zur Sitztiefenverstellung gemäß Figur 1 verbundene Traverse 83 sowie über Drehhebel 92, 94 und ein Verstellrohr 93 die Antriebseinrichtung 9 zur Sitzneigungsverstellung gemäß Figur 4 angreift.

Anhand der vergrößerten, perspektivischen Darstellung der Verstelleinrichtung gemäß Figur 4 und der Explosionsdarstellung der Einzelteile der Verstelleinrichtung gemäß Figur 5 soll der Aufbau der Verstelleinrichtung im einzelnen sowie deren Funktion näher erläutert werden.

Die die kombinierte Sitztiefen- und Sitzneigungsverstellung bewirkende Kreuzgelenkachse 3 durchgreift die beiden senkrecht zueinander stehenden Führungskulissen 1, 2, von denen die erste Führungskulisse 1 senkrecht zur Längserstreckung der Sitzseitenteile 11, 12 an deren vorderen Ende angeordnet und als Langloch mit einer nach innen gerichteten Seitenbegrenzung 10 versehen ist. Die ebenfalls von der Kreuzgelenkachse 3 begriffene zweite Führungskulisse 2 befindet sich in den beiden Sitzwannenaufnahmen 21, 22 und ist ebenfalls als Langloch ausgebildet, das sich im Wesentlichen senkrecht zur ersten Führungskulisse 1 erstreckt und eine den Innenflächen der Sitzseitenteile 11, 12 zugewandte, von der Seitenfläche der Sitzwannenaufnahmen 22 abstehende Seitenbegrenzung 20 gemäß Figur 6 aufweist. Die Kreuzgelenkachse 3 besteht aus drei Gleitelementen 4, 5, 6, die miteinander fluchtende Bohrungen 40, 50, 60 aufweisen, durch die ein Gewindebolzen 30 gemäß den Figuren 5, 15 und 16 gesteckt ist. Die Kreuzgelenkachse 3 ist mit einem Verstellhebel 7 verbunden, der eine obere Aufnahme 71 zur Aufnahme des mit einem Gewinde 33 versehenen Endes des Gewindebolzens 30, eine mittlere Aufnahme 72 zur Verbindung mit der Traverse 83 sowie eine untere Aufnahme 73 zur Verbindung mit einem zweiten Drehhebel 94 der Antriebseinrichtung 9 zur Sitzneigungsverstellung aufweist.

Von den Gleitelementen 4, 5, 6 sind die beiden äußeren Gleitelemente 4, 6 im Wesentlichen baugleich ausgebildet und weisen einen hohlzylindrischen Schaft 41, 61 auf, von denen der eine Schaft 41 in der ersten Führungskulisse 1 und der andere Schaft 61 in der zweiten Führungskulisse 2 in Längsrichtung gleitend angeordnet ist, so dass die Köpfe 42, 62 der äußeren Gleitelemente 4, 6 an den Außenflächen der Sitzseitenteile 11, 12 bzw. der nach innen gerichteten Flächen der Sitzwannenaufnahmen 21, 22 anliegen.

Zwischen den Führungskulissen 1, 2 ist das mittlere Gleitelement 5 angeordnet, das mit äußeren Stegen an den Seitenbegrenzungen 10, 20 der Führungskulissen 1, 2 anliegt und damit Kippbewegungen begrenzt.

Das Verstellrohr 93 der Antriebseinrichtung 9 zur Sitzneigungsverstellung ist an einer Bohrung 95 in den Sitzseitenteilen 11, 12 mittels zweiter Gewindebolzen 97 und über Lagerbuchsen 96 sowie eine Bohrung in einem zweiten Drehhebel 94 befestigt und über einen ersten Drehhebel 92 mit einer Spindel 91 verbunden, die von einem Antriebsmotor 90 zur Sitzneigungsverstellung verstellt wird.

Die Traverse 83 ist über ein Drehgelenk 82 mit einer Spindel 81 verbunden, die zusammen mit dem Antriebsmotor 80 die Antriebseinrichtung 8 zur Sitztiefenverstellung bildet.

Zur Sitztiefenverstellung wird der Antriebsmotor 80 in der einen oder anderen Drehrichtung betrieben und damit die Spindel 81 verlängert bzw. verkürzt, so dass die Lage des Antriebsmotors 80 und damit die Lage der mit dem Antriebsmotor 80 verbundenen Wannenbefestigung 23 in Bezug auf die Traverse 83 verändert wird. Das Drehgelenk 82 dient dabei einem Winkelausgleich bei der Lageverstellung. Da die Traverse 83 über die Kreuzgelenkachse 3 und die erste Kulissenführung 1 in den Sitzseitenteilen 11, 12 in Längsrichtung festgelegt ist, bewirkt eine Längenveränderung der Spindel 81 über die Sitzwannenbefestigung 23 und die seitlichen Sitzwannenaufnahmen 21, 22 eine Verschiebung der Sitzwannenaufnahmen 21, 22 über die Länge der zweiten Führungskulissen 2 in Bezug auf die Sitzseitenteile 11, 12.

Eine Betätigung des Antriebsmotors 90 der Antriebseinrichtung 9 zur Sitzneigungsverstellung bewirkt eine Längenveränderung der Spindel 91, eine Drehbewegung des ersten Drehhebels 92 und damit eine gleichartige Drehbewegung des zweiten Drehhebels 94, da das Verstellrohr 93 über die Bohrung 95 an den Sitzseitenteilen 11, 12 abgestützt ist. Mit einer Drehbewegung des Drehhebels 94 wird der Verstellhebel 7 über die untere Aufnahme 73 und durch die erste Führungskulisse 1 über die Kreuzgelenkachse 3 geführt angehoben bzw. abgesenkt, so dass die Sitzwanne gemäß Figur 1 an ihrem vorderen Ende angehoben und abgesenkt wird.

Über die die sich kreuzenden Führungskulissen 1, 2 verbindende Kreuzgelenkachse 3 wird somit eine von den beiden Antriebseinrichtungen 8, 9 für die Sitztiefen- und Sitzneigungsverstellung bewirkte kombinierte Verstellung in eine Sitztiefen- und Sitzneigungsverstellung umgesetzt, wobei jede der beiden Antriebseinrichtungen 8, 9 jeweils für die vertikale bzw. horizontale Verstellung verantwortlich ist.

Die in den Figuren 6 bis 14 dargestellten Einzelteile der Kreuzgelenkachse 3 sollen deren Aufbau und Funktion verdeutlichen.

Figur 6 zeigt in perspektivischer Ansicht die Sitzwannenaufnahmen 21, 22, die als Winkel ausgebildet sind und an ihren Seitenflächen die als Langloch ausgebildete zweite Führungskulisse 2 mit einer von der Seitenfläche abstehenden Seitenbegrenzung 20 aufweisen. An der Oberfläche sind die Sitzwannenaufnahmen 21, 22 mit Bohrungen zur Wannenbefestigung versehen.

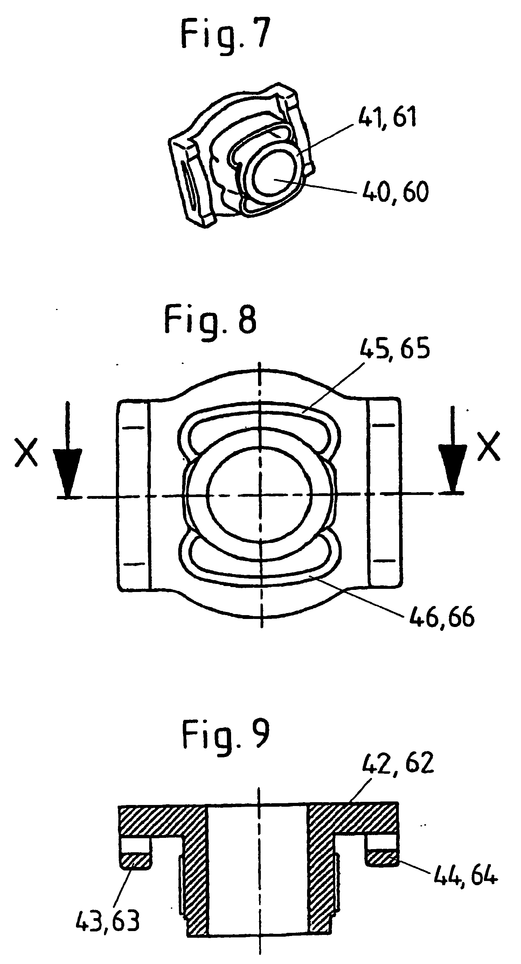

Die im Wesentlichen baugleichen äußeren Gleitelemente 4, 6 gemäß Figur 5, von denen das eine äußere Gleitelement 6 der Führungskulisse 2 der Sitzwannenaufnahmen 21, 22 zugeordnet ist sind in den Figuren 7 bis 9 dargestellt. Sie bestehen aus einem hohlzylindrischen Schaft 41, 61, dessen Bohrung 40, 60 mit der Bohrung des anderen äußeren Gleitelements 4, 6 und der Bohrung 50 im mittleren Gleitelement 5 fluchtet und der Aufnahme des Gewindebolzens 30 dient. Vom Kopf 42, 62 der äußeren Gleitelemente 4, 6 stehen seitliche Stege 43, 63 bzw. 44, 64 ab und umfassen die Seitenbegrenzungen 10, 20 der Führungskulissen 1, 2. Dabei sind die Enden der Stege 43, 63 bzw. 44, 64 federnd ausgebildet und liegen an den an die Seitenbegrenzungen 10, 20 angrenzenden Seitenflächen der Sitzseitenteile 11, 12 bzw. der Sitzwannenaufnahmen 21, 22 an. Der Schaft 41, 61 wird von gewölbten Stegen 45, 65 bzw. 46, 66 eingefasst, die eine bündige Anlage der Seitenbegrenzungen 10, 20 zwischen den seitlichen Stegen 43, 63 bzw. 44, 64 und den Stegen 45, 65 bzw. 46, 66 bewirken.

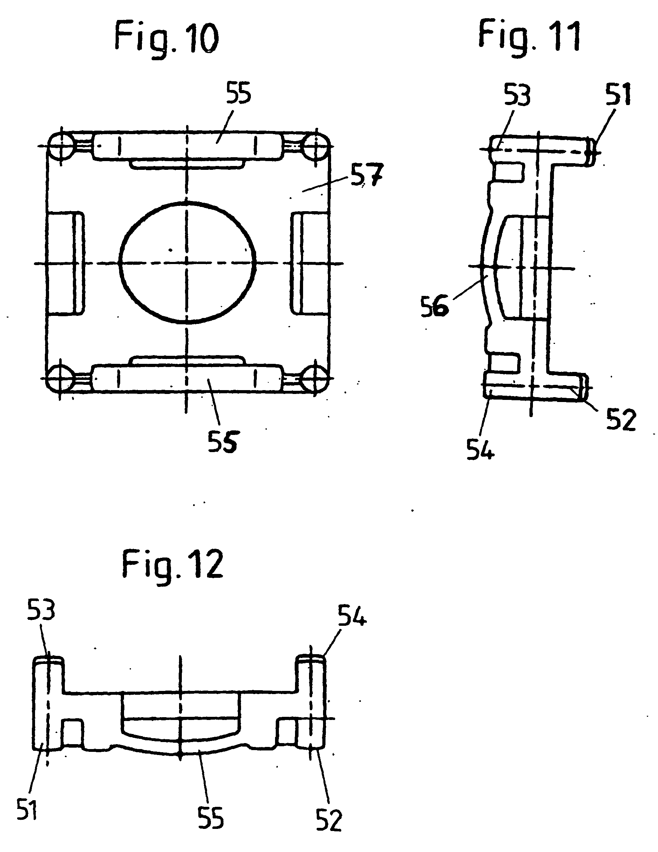

Das in den Figuren 10 bis 12 dargestellte mittlere Gleitelement 5 weist vom Gleitelementekopf 57 nach beiden Seiten abstehend Gleitstege 51 bis 54 auf, die um die Seitenbegrenzungen 10, 20 der Führungskulissen 1, 2 greifen und damit Kippbewegungen der Kreuzgelenkachse 3 begrenzen. Weiterhin weist das mittlere Gleitelement 5 federnde Zungen 55, 56 auf, die das axiale Spiel der Kreuzgelenkachse 3 ausgleichen und damit die äußeren Gleitelemente 4, 6 gegen die Seitenflächen der Seitenteile 11, 12 und Sitzwannenaufnahmen 21, 22 drücken.

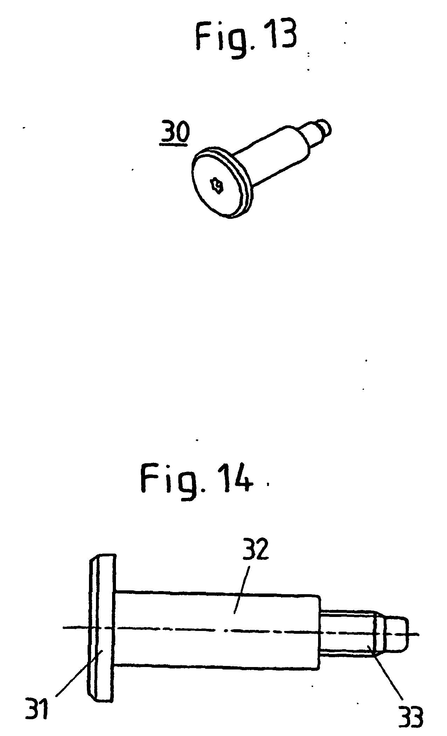

Figur 13 zeigt in einer perspektivischen Ansicht und Figur 14 in einer Seitenansicht den Gewindebolzen 30 zur Verbindung der drei Gleitelemente 4, 5, 6, dessen Schaft 32 durch die miteinander fluchtenden Bohrungen 40, 50, 60 der Gleitelemente 4, 5, 6 gesteckt ist und mit seinem Bolzenkopf 31 an den nach außen gerichteten Flächen der Sitzseitenteile 11, 12 anliegt und mit seinem Gewindeteil 33 mit dem Verstellhebel 7 verschraubt ist.

## Patentansprüche

1. Sitzuntergestell für einen Fahrzeugsitz, mit jeweils einem zwei Seitenteile aufweisenden Sitzrahmen, einer Sitzwanne zur Aufnahme eines Sitzkissens und einer Einrichtung zur Sitztiefen- und Sitzneigungsverstellung und mit einer jeweils in den Sitzseitenteilen (11, 12) angeordneten ersten Führungskulisse (1),
**gekennzeichnet durch**
eine jeweils in Sitzwannenaufnahmen (21, 22) angeordnete zweite Führungskulisse (2),
und eine Kreuzgelenkachse (3), die beide Führungskulissen (1, 2) durchgreift und mit einem Antrieb (8) zur Sitztiefenverstellung und einem Antrieb (9) zur Sitzneigungsverstellung verbunden ist.

2. Sitzuntergestell nach Anspruch 1, **dadurch gekennzeichnet, dass** die Führungskulissen (1, 2) als Langloch ausgebildet und im wesentlichen senkrecht zueinanderstehend ausgerichtet sind.

3. Sitzuntergestell nach Anspruch 2, **dadurch gekennzeichnet, dass** die in den Sitzseitenteilen (11, 12) angeordneten Führungskulissen (1) im wesentlichen senkrecht zur Längserstreckung der Sitzseitenteile (11, 12) verlaufen.

4. Sitzuntergestell nach mindestens einem der voranstehenden Ansprüche, **dadurch gekennzeichnet, dass** die Kreuzgelenkachse (3) aus drei mit einer Bohrung (40, 50, 60) versehenen Gleitelementen (4, 5, 6) und einem durch die Bohrungen (40, 50, 60) der Gleitelemente (4, 5, 6) und die Führungskulissen (1, 2) gesteckten Gewindebolzen (30) gebildet sind.

5. Sitzuntergestell nach Anspruch 4, **dadurch gekennzeichnet, dass** äußere Gleitelemente (4, 6) zur Sitztiefen- und Sitzneigungsverstellung in den Führungskulissen (1, 2) der Sitzseitenteile (11, 12) und der Sitzwannenaufnahmen (21, 22) gleitend angeordnet sind und dass ein mittleres Gleitelement (5) zur Abstützung der Sitztiefen- und Sitzneigungsverstellung zwischen den Führungskulissen (1, 2) der Sitzseitenteile (11, 12) und der Sitzwannenaufnahmen (21, 22) angeordnet ist.

6. Sitzuntergestell nach Anspruch 5, **dadurch gekennzeichnet, dass** die äußeren Gleitelemente (4, 6) einen in die jeweilige Führungskulisse (1 bzw. 2) gesteckten hohlzylindrischen Schaft (41, 61) und seitliche, vom Kopf (42, 62) der äußeren Gleitelemente (4, 6) abstehende Stege (43, 44; 63, 64) aufweisen, die an Seitenbegrenzungen (10, 20) der Führungskulissen (1, 2) der Sitzseitenteile (11, 12) bzw. der Sitzwannenaufnahmen (21, 22) anliegen.

7. Sitzuntergestell nach Anspruch 6, **dadurch gekennzeichnet, dass** die einander zugewandten Seitenbegrenzungen (10, 20) der Führungskulissen (1, 2) von den Seitenflächen der Sitzseitenteile (11, 12) und der Sitzwannenaufnahmen (21, 22) abstehen und dass das mittlere Gleitelement (5) die Seitenbegrenzungen (10, 20) der Führungskulissen (1, 2) umfassende Stege (51, 52, 53, 54) und an den Seitenflächen der Sitzseitenteile (11, 12) und der Sitzwannenaufnahmen (21, 22) anliegende, federnde Zungen (55, 56) aufweist.

8. Sitzuntergestell nach mindestens einem der voranstehenden Ansprüche, **dadurch gekennzeichnet, dass** die Kreuzgelenkachse (3) über einen Verstellhebel (7) sowohl mit einem Spindelantrieb (80, 81) zur Sitztiefenverstellung (8) als auch mit einem Spindelantrieb (90, 91) zur Sitzneigungsverstellung (9) verbunden ist.

9. Sitzuntergestell nach Anspruch 8, **dadurch gekennzeichnet, dass** der Spindelantrieb (80, 81) zur Sitztiefenverstellung (8) über ein Drehgelenk (82) und einer Traverse (83) mit dem Verstellhebel (7) verbunden ist.

10. Sitzuntergestell nach Anspruch 8, **dadurch gekennzeichnet, dass** der Spindelantrieb (90, 91) zur Sitzneigungsverstellung (9) über einen ersten Drehhebel (92) mit einem die beidseitigen Kreuzgelenkachsen (3) verbindenden Verstellrohr (93) und über einen zweiten Drehhebel (94) mit dem Verstellhebel (7) verbunden ist.

11. Sitzuntergestell nach Anspruch 10, **dadurch gekennzeichnet, dass** der Verstellhebel (7) eine erste Aufnahme (71) zur Anlenkung des Gewindebolzens (30), eine mittlere Aufnahme (72) zur Anlenkung der Traverse (83) und eine dritte Aufnahme (73) zur Anlenkung des zweiten Drehhebels (94) zur Sitzneigungsverstellung (9) aufweist.

## Claims

1. Seat base body for a vehicle seat, with a seat frame having two side parts, a seat trough for holding a seat cushion and a device for adjusting the seat depth and seat incline and with first guiding slides (1) mounted in the seat side parts (11,12),
**characterised by**
a second guiding slide (2) arranged in each seat trough holder (21,22), and by a universal joint axis (3) which engages through the two guiding slides (1, 2) and is connected to a drive (8) for adjusting the seat depth and a drive (9) for adjusting the seat incline.

2. Seat base body according to claim 1, **characterised in that** the guiding slides (1, 2) are formed as oblong holes and are aligned substantially perpendicular to one another.

3. Seat base body according to claim 2, **characterised in that** the guiding slides (1) mounted in the seat side parts (11, 12) run substantially perpendicular to the longitudinal extension of the seat side parts (11, 12).

4. Seat base body according to at least one of the preceding claims, **characterised in that** the universal joint axis (3) is formed from three slide elements (4, 5, 6) each provided with a bore (40, 50, 60) and from a threaded bolt (30) which is pushed through the bores (40, 50, 60) of the slide elements (4, 5, 6) and the guiding slides (1, 2).

5. Seat base body according to claim 4, **characterised in that** outer slide elements (4, 6) for adjusting the seat depth and the seat incline are mounted for sliding movement in the guiding slides (1, 2) of the seat side parts (11, 12) and the seat trough holders (21, 22) and that a middle slide element (5) for supporting the seat depth and seat incline adjustment is mounted between the guiding slides (1, 2) of the seat side parts (11, 12) and the seat trough holders (21, 22).

6. Seat base body according to claim 5, **characterised in that** the outer slide elements (4, 6) have a hollow cylindrical shaft (41, 61) which is pushed into the relevant guiding slide (1 or 2), and lateral webs (43, 44; 63, 64) which protrude from the top (42, 62) of the outer slide elements (4, 6) and which bear against the side limits (10, 20) of the guiding slides (1, 2) of the seat side parts (11, 12) or of the seat trough holders (21, 22) respectively.

7. Seat base body according to claim 6, **characterised in that** the side limits (10, 20) of the guiding slides (1, 2) facing one another protrude from the side faces of the seat side parts (11, 12) and the seat trough holders ( 21, 22) and that the middle slide element (5) has webs (51, 52, 53, 54) surrounding the side limits (10, 20) of the guiding slides (1, 2), and resilient tongues (55, 56) which bear against the side faces of the seat side parts (11, 12) and the seat trough holders (21, 22).

8. Seat base body according to at least one of the preceding claims, **characterised in that** the universal joint axis (3) is connected through an adjusting lever (7) both to a spindle drive (80, 81) for seat depth adjustment (8) as well as to a spindle drive (90, 91) for seat incline adjustment (9).

9. Seat base body according to claim 8, **characterised in that** the spindle drive (80, 91) for seat depth adjustment (8) is connected to the adjusting lever (7) through a rotational joint (82) and a cross bar (83).

10. Seat base body according to claim 8, **characterised in that** the spindle drive (90, 91) for seat incline adjustment (9) is connected via a first rotary lever (92) to an adjusting tube (93) connecting the two universal joint axes (3) on either side and by a second rotary lever (94) to the adjusting lever (7).

11. Seat base body according to claim 10, **characterised in that** the adjusting lever (7) has a first socket (71) for connecting the threaded bolt (30), a middle socket (72) for connecting the cross bar (83) and a third socket (73) for connecting the second rotary lever (94) for seat incline adjustment (9).

## Revendications

1. Châssis d'assise pour un siège de véhicule, avec un bâti de siège présentant deux parties latérales, un baquet de siège destiné à recevoir un coussin et une installation de réglage de la profondeur et de l'inclinaison du siège et avec une première coulisse de guidage (1) disposée sur chacune des parties latérales (11, 12) de siège,
**caractérisé par**
une seconde coulisse de guidage (2) disposée dans chacun des logements (21, 22) du baquet de siège,
et un axe d'articulation à cardan (3), qui passe à travers les deux coulisses de guidage (1, 2) et est relié à un mécanisme de commande (8) destiné au réglage de la profondeur du siège et à un mécanisme de commande (9) destiné au réglage de l'inclinaison du siège.

2. Châssis d'assise selon la revendication 1, **caractérisé en ce que** les coulisses de guidage (1, 2) ont la forme d'un trou oblong et sont orientées de manière essentiellement perpendiculaire l'une par rapport à l'autre.

3. Châssis d'assise selon la revendication 2, **caractérisé en ce que** les coulisses de guidage (1) disposées dans les parties latérales (11, 12) de siège s'étendent de manière essentiellement perpendiculaire par rapport à l'orientation longitudinale des parties latérales (11, 12) de siège.

4. Châssis d'assise selon au moins une des revendications précédentes, **caractérisé en ce que** les axes d'articulation à cardan (3) sont constitués de trois éléments coulissants (4, 5, 6) pourvus d'un alésage (40, 50, 60) et d'un boulon fileté (30) inséré à travers les alésages (40, 50, 60) des éléments coulissants (4, 5, 6) et les coulisses de guidage (1, 2).

5. Châssis d'assise selon la revendication 4, **caractérisé en ce que** des éléments coulissants extérieurs (4, 6) destinés au réglage de la profondeur du siège et de l'inclinaison du siège sont disposés de manière coulissante dans les coulisses de guidage (1, 2) des parties latérales (11, 12) du siège et des logements (21, 22) du baquet de siège, et **en ce qu'**un élément coulissant intermédiaire (5) destiné à supporter le réglage de la profondeur du siège et de l'inclinaison du siège est disposé entre les coulisses de guidage (1, 2) des parties latérales (11, 12) du siège et des logements (21, 22) du baquet de siège.

6. Châssis d'assise selon la revendication 5, **caractérisé en ce que** les éléments coulissants extérieurs (4, 6) présentent un arbre (41, 61) en forme de cylindre creux inséré dans chacune des coulisses de guidage (1 ou 2) et des entretoises latérales (43, 44 ; 63, 64) qui s'étendent à partir de la tête (42, 62) des éléments coulissants extérieurs (4, 6), lesquelles entretoises reposent sur les butées de limitation latérales (10, 20) des coulisses de guidage (1, 2) des parties latérales de siège (11, 12) ou des logements (21, 22) du baquet de siège.

7. Châssis d'assise selon la revendication 6, **caractérisé en ce que** les butées de limitation latérales (10, 20) tournées l'une vers l'autre des coulisses de guidage (1, 2) s'étendent à partir des surfaces latérales des parties latérales (11, 12) de siège et des logements (21, 22) du baquet de siège, et **en ce que** l'élément coulissant intermédiaire (5) présente des entretoises (51, 52, 53, 54) entourant les butées de limitation latérales (10, 20) des coulisses de guidage (1, 2) et des languettes à ressorts (55, 56) situées sur les surfaces latérales des parties latérales (11, 12) du siège et des logements (21, 22) du baquet de siège.

8. Châssis d'assise selon au moins une des revendications précédentes, **caractérisé en ce que** l'axe d'articulation à cardan (3) est relié, par l'intermédiaire d'un levier de réglage (7), tant à un mécanisme de commande de broche (80, 81) destiné au réglage de la profondeur du siège (8) qu'à un mécanisme de commande de broche (90, 91) destiné au réglage de l'inclinaison du siège (9).

9. Châssis d'assise selon la revendication 8, **caractérisé en ce que** le mécanisme de commande de broche (80, 81) destiné au réglage de la profondeur du siège (8) est relié au levier de réglage (7) par l'intermédiaire d'une articulation tournante (82) et d'une traverse (83).

10. Châssis d'assise selon la revendication 8, **caractérisé en ce que** le mécanisme de commande de broche (90, 91) destiné au réglage de l'inclinaison du siège (9) est relié à un tube de réglage (93), reliant les deux côtés de l'axe d'articulation à cardan (3), par l'intermédiaire d'une premier levier tournant (92), et est relié au levier de réglage (7) par l'intermédiaire d'un second levier tournant (94).

11. Châssis d'assise selon la revendication 10, **caractérisé en ce que** le levier de réglage (7) présente un premier logement (71) pour l'articulation du boulon fileté (30), un logement intermédiaire (72) pour l'articulation de la traverse (83) et un troisième logement (73) pour l'articulation du second levier tournant (94) destiné au réglage de l'inclinaison du siège (9).
